(19) Europäisches Patentamt
European Patent Office
Office européen des brevets

(11) Publication number : **0 396 824 B1**

# (12) EUROPEAN PATENT SPECIFICATION

(45) Date of publication of patent specification : **31.08.94 Bulletin 94/35**

(51) Int. Cl.$^5$ : **G02F 1/1335,** G03C 7/12

(21) Application number : **89200920.0**

(22) Date of filing : **13.04.89**

## (54) Process for the production of a multicolour liquid crystal display device.

(43) Date of publication of application : **14.11.90 Bulletin 90/46**

(45) Publication of the grant of the patent : **31.08.94 Bulletin 94/35**

(84) Designated Contracting States : **BE DE FR GB NL**

(56) References cited :
**EP-A- 0 277 385**
**DE-A- 2 926 189**
**DE-A- 3 105 333**
**DE-A- 3 546 124**
**PATENT ABSTRACTS OF JAPAN, vol. 8, no. 202 (P-300), 14th October 1984 ; & JP-A-59 086 012**
**PATENT ABSTRACTS OF JAPAN, vol. 8, no. 202 (P-300), 14th October 1984 ; & JP-A-59 086 011**

(56) References cited :
**PATENT ABSTRACTS OF JAPAN, vol. 11, no. 378 (P-645), 10th December 1987 ; & JP-A-62 148 952**
**PATENT ABSTRACTS OF JAPAN, vol. 9, no. 296 (P-407)[2019], 22nd November 1985 ; & JP-A-60 133 427**

(73) Proprietor : **AGFA-GEVAERT naamloze vennootschap**
**Septestraat 27**
**B-2640 Mortsel (BE)**

(72) Inventor : **Roosen, Raymond Albert**
**Parklaan 12**
**B-2232 's-Gravenwezel (BE)**
Inventor : **De Meyer, Marcellus Henricus**
**Ter Voortlaan 33**
**B-2520 Edegem (BE)**
Inventor : **Michiels, Eddy Alfons**
**Ijzermaalberg 80**
**B-2550 Kontich (BE)**



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a multicolour liquid crystal device and the production thereof.

As described in GB-A 1 509 643 there are three basic types of liquid crystal material. These are termed nematic, smectic and cholesteric. A survey of the use of such substances in liquid crystal display devices is given e.g. in Scientific American, vol. 222, April, 1970, p. 100-106, and more recently in the periodical OEP February, 1985, p. 43-47 under the headings Spectrum Liquid Crystal Display and "Liquid Crystal Gets Second Look as a Promising Display Medium".

In multicolour liquid crystal devices multicolour filter arrays are used in conjunction with pixelwise energizable electrodes having a liquid crystal layer in between. For high resolution display of information the pixel areas (picture element areas) are commonly less than $1x10^{-8}$ m2 in area so that in the manufacture of the filter elements and electrode areas a high accuracy is required.

Up till now in praxis photolithographic processes have been used to prepare the pixel-electrode systems and mosaic type filter elements. These processes, examples of which are described in US-A 4,565,756 and published EP-A 0 249991, are relatively complex and time consuming.

In GB-A 1,509,643 has been proposed to produce a proper multicolour filter pattern in a transparent plastic silver halide emulsion type film and to sandwich the processed film between two pieces of glass, one to provide physical rigidity and one upon which has been previously deposited the required transparent conductive electrode coating as can be learned from Fig. 5a.

Such structural arrangement has the disadvantage that there is a rather large distance between the liquid crystal layer and the filter pattern so that a light modulated pixel area in the liquid crystal layer comes in cross-talk with more than one filter pixel element by what is known as parallax effect.

In published UK Patent Application GB-A 2 142 180 A a liquid crystal display of the light-scattering type is described capable of portraying displays in full colour when back-lit via a primary coloured filter mosaic whose elements are in optical registry with the pixels. In an embodiment of said liquid crystal display device the filter mosaic is a classical photographic multilayer colour transparency not arranged between the display electrodes but glued on one of them and covered with an optical louvre for back-lit exposure hereby preventing direct back-lit exposure light from interfering with light coming from the pixelwise electrically modulated light-scattering in the liquid crystal layer resulting in a lowered contrast. The use of said louvre structure makes the display more complicated. Between the electrodes liquid crystals known as smectic or cholesteric are arranged to provide electro-optic scattering effects. Electro-optic scatterring effects in the nematic phase may be used likewise, but typically the relaxation time associated with such effects in that phase is too long and provides relatively severe multiplexing problems. Said liquid crystal devices have not been used commercially in fast switching displays, e.g. in LCD television sets.

The devices on the market for that application are displays wherein faster switching twisted nematic liquid crystal layers are used in combination with photolithographically produced filter elements. Direct deposition and adherence under high vacuum conditions of electrode material on a filter layer made by silver halide emulsion layer photography and containing gelatin proved to be impossible because of the inevitable presence of moisture in gelatin.

In faster switching liquid crystal matrix displays pre-aligned twisted nematic (TN) liquid crystals, supertwisted nematic liquid crystals or smectic C (chiral smectic) ferroelectric liquid crystals are used for obtaining an electrical switching of light by controlled rotation of the polarization plane. The use of said liquid crystals in electronically controlled displays is described e.g. in the periodical DISPLAYS, January 1986, by J. Duchène in "Multiplexed Liquid Crystal Matrix Displays", p. 3-11 and in Electronic Components and Applications, Vol. No. 4, September 1983, p. 293. The electro-optics of ferroelectric liquid crystals are discussed in OPTICAL ENGINEERING Feb. 1987/Vol. 26, No. 2/p. 129-132.

In published EP-A 0 277 385 a process is described wherein in the manufacture of a multicolour liquid crystal display of the twisted nematic type, also called TN-LCD, a multicolour filter element is used that has been prepared by the steps of :

(1) pattern-wise photo-exposing a photographic silver halide emulsion material comprising on a glass support a single gelatin containing silver halide emulsion layer to form a latent pattern of exposed silver halide,
(2) treating the exposed silver halide emulsion layer with an aqueous solution containing a developing agent for colour development, a chromogenic coupler, and a colourless coupling agent to form a dye and a diffusion resistant colourless reaction product with oxidized developing agent thereby increasing pattern-wise the thickness of said single developed silver halide emulsion layer, and repeating the steps (1) and (2) at least once so that a multicolour filter element with differently coloured pixels of different thickness according to colour of the pixels is formed (see Fig. 2).

Said EP-A process for the production of a multicolour filter element for a liquid crystal display device of

the twisted nematic type is particularly time consuming by the several exposure and processing steps to be applied for each colour and requires an expensive step-and-repeat exposure apparatus for in register exposure of the intermediately colour processed single emulsion layer material.

In DE-A-35 46 124 a process for the production of a LCD-display is described wherein a liquid crystal layer (6) together with a multi-colour filter element (5) is arranged between front and rear transparent electrodes (3,4) in the form of strips on transparent glass supports (1,2). The strips are in one electrode structure orientated perpendicularly to the strips of the other electrode structure, said strips being formed by etching.

According to Fig. 1 the strips forming one electrode (3) are made by etching on a transparent glass support (1) and said strips are in direct contact with an assemblage (5) of multi-colour silver halide emulsions each having a spectral sensitivity for a different primary colour that are (i) exposed with white light through a mask that contains a matrix of the three primary colours (positive process) or contains the complementary colours (negative process), (ii) developed, (iii) bleached, and (iv) fixed. The liquid crystal layer (6) (see also Fig. 2) makes at one side contact with the outermost silver halide emulsion layer of said assemblage (5) and at the other side makes contact with the strips of the electrode (4) formed by etching on the transparent glass support (2).

In praxis as described in the above mentioned periodical DISPLAYS best results are obtained with TN liquid crystal cells wherein transparent electrode pixels are facing the liquid crystal layer and are at the opposite side in contact or close proximity to the mosaic of colour filter pixels. Hereby voltage drop by an intermediary element is avoided and the parallax effect between the liquid crystal (LC) layer and the colour filter element is kept at a minimum. Such arrangement is illustrated likewise in Optical Engineering/May/June 1984/Vol. 23 No. 3, page 244, Fig. 10 wherein a common transparent electrode is applied onto a mosaic of colour filter elements.

It is an object of the present invention to provide a process for the production of a multicolour liquid crystal display device of the type containing pre-aligned twisted nematic or ferroelectric liquid crystals in combination with a multicolour filter element produced by means of a photographic colour processable silver halide emulsion material, wherein said problems of voltage drop, image parallax and adherence of a vacuum-coated electrode on the filter element have been solved.

It is a further object of the present invention to apply said process for convenient and fast mass production of multicolour liquid crystal display devices.

Other objects and advantages of the present invention will appear from the further description and drawing.

According to the present invention a process is provided for the production of a structure comprising a multicolour filter and a transparent electrode layer which structure is adapted for the manufacture of a multicolour liquid crystal display device comprising between a pair of electrodes a liquid crystal layer essentially consisting of nematic crystals in twisted or supertwisted configuration or smectic C (chiral smectic) ferroelectric liquid crystals wherein the liquid crystal molecules are aligned in such a way that said layer shows an electrically controllable rotation of the polarization plane of light transmitted therethrough, when altering pixelwise the electric field over the liquid crystal layer, and said electrodes are associated respectively with a front and rear light polarizer element, which process comprises in consecutive order the steps of :

(1) providing a photographic print material that contains on a glass support a plurality of differently spectrally sensitive silver halide emulsion layers,

(2) subjecting said print material to a single step multicolour pixelwise exposure,

(3) colour processing said exposed print material producing thereby in each silver halide emulsion layer a differently coloured pixel pattern,

(4) coating said colour processed print material at its silver halide emulsion layer assemblage side with a hydrophobic water-impermeable organic resin layer, and

(5) depositing by vacuum-coating said transparent electrode layer on said organic resin layer serving as a covering layer for said processed silver halide emulsion layer assemblage forming said multicolour filter.

Further in accordance with the present invention a multicolour liquid crystal display device is provided which comprises between a pair of electrodes a liquid crystal layer essentially consisting of nematic crystals in twisted or supertwisted configuration or smectic C (chiral smectic) ferroelectric liquid crystals wherein the liquid crystal molecules are aligned in such a way that said layer shows an electrically controllable rotation of the polarization plane of light transmitted therethrough, when altering pixelwise the electric field over the liquid crystal layer, and said electrodes are 0associated respectively with a front and rear light polarizer element, wherein said device further comprises a multicolour filter element which is made of a colour processed silver halide emulsion layer material having an assemblage of a plurality of differently spectrally sensitive silver halide emulsion layers coated on a glass support, and said multicolour filter element at its silver halide emulsion layer assemblage side is coated with a hydrophobic water-impermeable organic resin layer whereon one of said electrodes making direct contact with said liquid crystal layer is present.

In the accompanying drawing a diagrammatic cross-sectional view of a liquid crystal display prepared according to a preferred embodiment of the process of the present invention is given.

By the wording "colour processing" is understood herein that with the aid of imagewise developable silver halide in a chemical process a dye image is obtained in the photo-exposed photographic multilayer material.

According to a preferred embodiment the assemblage of colour processed hydrophilic colloid binder silver halide emulsion layers before coating thereon in step (4) said hydrophobic water-impermeable organic resin layer is preferably made less permeable to water and less susceptible to mechanical damage by hardening the hydrophilic colloid binder, more particularly the gelatin of the processed multilayer silver halide emulsion layers. Gelatin hardening agents for said purpose are known to those skilled in the art in silver halide photography and for particular classes and representatives thereof reference is made e.g. to T. H. James in "The Theory of the Photographic Process" 4th ed. - Macmillan Publishing Co., Inc. New York - (1977), p. 78-87.

Particularly reactive hardening agents for gelatin containing layers contain a plurality of epoxy groups as described e.g. in DE-OS 29 35 354.

The hydrophobic water-impermeable organic resin layer which covers the colour processed gelatin containing silver halide emulsion layer assemblage and whereon the electrode material is vapour-coated, e.g. by vacuum evaporation or sputtering, is made preferably of a polymeric resin material having a high specific electric resistivity, e.g. of at least $10^{10}$ ohm.cm. The covering layer has a thickness preferably not higher than 100 micron, preferably has a thickness in the range of 1 to 10 micron.

Examples of sufficiently electrically resistive polymeric material for producing a hydrophobic water-impermeable covering layer whereon electrode material can be vapour-deposited with good adherence are described in US-P 4,698,295, 4,668,601 and in published EP-A 0 179 636.

In a particular embodiment a highly water-impermeable hydrophobic covering coating on the assembly of colour processed silver halide emulsion layers of the print material is formed by means of hydrophobic crosslinkable polymer or prepolymer-monomer compositions that are curable by ultra-violet light or is a polymer curable by heat. Radiation-curing proceeds preferably with ultra-violet radiation in the wavelength range of 150 to 450 nm using monomers and pre-polymers that can be polymerized and cross-linked by free-radical polymerization with the aid of a substance that produces free radicals on UV irradiation. A survey of such substances called photoinitiators is given by S. Peter Pappas in "UV Curing: Science and Technology" - Technology Marketing Corporation, 642 Westover Road - Stanford - Connecticut - USA - 06902 (1979). Particularly suited photoinitiators are selected from the group of benzoin ethers, benzil ketals, acetophenone derivatives, ketoxime esters, benzophenone and thioxanthone derivatives. Suitable monomers for providing a cross-linking reaction are selected e.g. from the group of hexane diol diacrylate, silicone diacrylate, trimethylolpropane triacrylate, aliphatic and aromatic urethane acrylates, glycidyl acrylate, and mixtures of these monomers. The monomeric products are preferably solvents for the prepolymers used. Suitable prepolymers are e.g. polyester acrylates, epoxy resin acrylates, urethane acrylate and urethane diacrylate compounds examples of which are described in US-P 4,761,363. Monomers and prepolymers still containing free isocyanate or epoxy groups are preferred for a good adherence to the colour processed silver halide emulsion assemblage since they make cross-links with the gelatin contained therein (ref. e.g. UK Patent Application 2 121 812A).

Examples of heat-curable organic resins and curing agents therefor are described by Ernest W. Flick in "Handbook of Adhesive Raw materials" - Noyens Publications - Park Ridge, New Jersey, USA (1982). Epoxy resins that can be cured with amines and/or anhydrides are preferred.

The water-impermeable hydrophobic organic resin layer may be coated from a liquid composition containing (an) evaporatable solvent(s) or may be applied onto the processed multicolour material by lamination using e.g. a photopolymerizable layer sandwiched originally between a polyethylene film and a protective cover sheet analogously to the type of material described in J. photogr. Sci., 18, 150 (1970).

The wet strength of the colour processed gelatin containing silver halide emulsion layer assemblage before coating with the organic resin layer in step (4) can be greatly improved (moisture sensitivity is reduced) by a treatment with an aqueous composition containing the self-cross-linking reaction product of :

(i) an epihalohydrin or an Alpha-dihalohydrin,

(ii) a water-soluble polyamide, and

(iii) a water-soluble polyamine containing at least two nitrogen atoms separated by at least three carbon atoms and optionally also by at least one oxygen or sulphur atom and having at least two hydrogen atoms attached to different nitrogen atoms. Said self-cross-linking reaction product may form itself a water-impermeable hydrophobic organic resin layer serving as covering layer or as subbing layer for another outermost water-impermeable organic resin layer.

The preparation of the above defined self-cross-linking reaction product is given in GB-P 1 269 381, wherein said product is described for improving the wet strength of paper.

Examples of epihalohydrins and Alpha-dihalohydrins for application in the preparation of said self-cross-linking reaction product are epibromohydrin, Alpha-dibromohydrin, epichlorohydrin and Alpha-dichlorohydrin. Those self-cross-linking reaction products are preferred which have been prepared with the use of 0.5-1.5 mole, especially 0.8-1.2 mole, of epihalohydrins or Alpha-dihalohydrins per basic amino group in the polyamides (ii) and polyamines (iii).

Examples of water-soluble polyamides (ii) useful in the preparation of said self-cross-linking reaction product are : reaction products of saturated aliphatic $C_4$-$C_{10}$-dicarboxylic acids, such as succinic acid, glutaric acid, adipic acid, diglycollic acid and sebacic acid, or with their functional derivatives, such as anhydrides or esters, with aliphatic polyamines containing at least two primary amino groups and at least one secondary or tertiary amino group; examples of such amines are for instance methyl-bis-(3-amino-propyl)-amine, ethyl-bis-(3-amino-propyl)-amine, 2-hydroxyethyl-bis(3-amino-propyl)-amine, N-(3-amino-propyl)-tetramethylene-diamine and N,N′-bis-(3-amino-propyl)-tetramethylene-diamine, but especially polyalkylene polyamines corresponding to the following general formula :

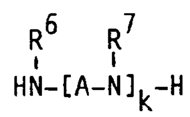

wherein :
A denotes a $C_2$-$C_8$-alkylene residue, $R^6$ and $R^7$ independently of one another stand for hydrogen or a $C_1$-$C_{10}$-alkyl residue optionally substituted by an amino or hydroxy group, and
k is a number from 2-5.

Examples of said polyalkylene polyamines are di-propylene-(1,2)-triamine, bis(3-amino-propyl)-amine, tri-propylene-(1,2)-tetramine and especially diethylene-triamine and tetra-ethylene-pentamine.

Examples of water-soluble polyamines (iii) useful in the preparation of said self-cross-linking reaction product are : 1,3-bis-(2-amino-ethylamino)-propane, 3-(3-diethylamino-propylamino)-propylamine, bis,-(2-amino-ethyl)-ether, 2,2′-bis-methylamino-diethylether,2,2′-bis- (2-amino-ethylamino)-diethyl ether, bis-(3-amino-propyl)-ether,bis(3-amino-propyl)-sulphide, 1,6-bis-(2-amino-ethylamino)-hexane, 1,6-bis-(3-amino-propylamino)-hexane, bis-(6-amino-n-hexyl)-amine and 1,3-diamino-butane and especially polyalkylene polyamines corresponding to the following general formula :

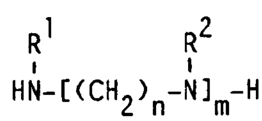

wherein :
$R^1$ and $R^2$ independently of one another denote hydrogen or a $C_1$-$C_4$-alkyl residue optionally substituted by an amino or a hydroxy group,
m is a number from 1-8, preferably 2-4, and
n is a number from 3-10, preferably 3-6.

Examples of such polyalkylene polyamines are 1,3-diamino-propane, 1-amino-3-methylamino-propane, 1,3-bis-(2-hydroxy-ethylamino)-propane, 1,4-di-amino-butane, 1,4-bis-methylamino-butane, N-(3-amino-propyl)-tetramethylene-diamine, N,N′-bis-(3-amino-propyl)-tetramethylene-diamine and especially bis-(3-amino-propyl)-amine and hexamethylene-diamine,

Futher are mentioned polyamines corresponding to the following general formula :

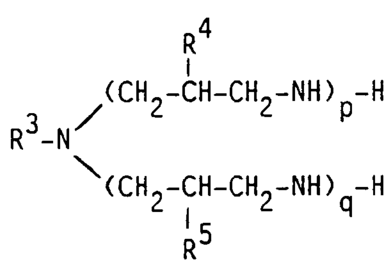

wherein
$R^3$ denotes a $C_1$-$C_{18}$-alkyl residue optionally substituted by an amino or a hydroxy group,
$R^4$ and $R^5$ stand independently of one another for hydrogen or a methyl group and
the sum p+q is a number from 1-20, preferably 2-5.

Examples of said polyamines are : ethyl-bis-(3-amino-propyl)-amine, 2-hydroxy-ethyl-bis-(3-amino-propyl )-amine, n-butyl-bis-(3-amino-propyl)-amine, tris-(3-amino-propyl)-amine and especially methyl-bis-(3-amino-propyl)-amine.

Still other suitable water-soluble cycloaliphatic and araliphatic polyamines are e.g. 1,4-di-amino-cyclohexane, 1-aminomethyl-5-amino-1,3,3-trimethyl-cyclohexane, 1,3-bis-aminomethyl-benzene and benzyl-bis-(3-amino-propyl)-amine.

A preferred self-cross-linking reaction product for use according to the present invention is "reaction product 2" obtained as a 10 % by weight solution according to said GB-P 1 269 381 and which product is called hereinafter in the Example "Reaction product R". In the preparation of said reaction product R a mixture of the polyamide defined as reaction product 1 in said GB-P and methyl-bis-(3-amino-propyl)-amine were reacted with epichlorohydrin.

The treatment of the gelatin containing layers proceeds preferably with an aqueous composition containing said self-cross-linking reaction product in an amount of 10 g/l to 160 g/l. To avoid premature crosslinking said treatment takes place at room temperature (20 °C) with the treating liquid having a pH lower than 7, e.g. at a pH in the range of 3 to 5.

The hydrophilic colloid multilayer assemblage of the print material is applied to a glass support, e.g. having a thickness in the range of 0.5 to 1.5 mm. For a good aherence to the hydrophilic layers the glass support is pre-coated with a subbing layer. Particularly suitable subbing layers for said purpose are on the basis of silicon compounds, e.g. these described in US-P 3,661,584 and GB-P 1,286,467 or for improving the adherence said compounds are added to the composition of the hydrophilic colloid layer adjacent to the glass support.

According to an embodiment for forming a full-colour filter element the photographic multilayer material serving as print material comprises before its exposure a transparent glass support coated with three differently spectrally sensitive silver halide emulsion layers one of which has a spectral sensitivity in the visible spectrum essentially consisting of blue sensitivity and contains a colour coupler for forming in colour development a yellow dye, the other two silver halide emulsion layers are sensitive to green and red light respectively but essentially insensitive to blue light and contain a colour coupler for magenta and cyan respectively. The essentially blue sensitive layer is e.g. a silver halide emulsion layer the silver halide of which is mainly silver bromide, but may contain blue-sensitized (400-500 nm) silver chloride. The other silver halide emulsion layers being sensitive respectively to green and red light contain e.g. silver chloride that has been spectrally sensitized to green (500-600 nm)and red (600-700 nm) light respectively.

According to a preferred embodiment for forming a full-colour filter element with good light-stability the photographic multilayer material serving as print material comprises before its exposure a transparent glass support coated with three differently spectrally sensitive silver halide emulsion layers one of which has a spectral sensitivity in the visible spectrum essentially consisting of blue sensitivity and contains a yellow dye that can be destroyed according to the principles of the dye-bleach process with the aid of developed silver, the other two silver halide emulsion layers are sensitive to green and red light respectively but essentially insensitive to blue light and contain respectively a magenta and cyan dye that can be destroyed according to principles of the dye-bleach process with the aid of developed silver.

According to another embodiment the photographic multilayer material serving as print material contains an outermost silver halide emulsion layer that has a spectral sensitivity in the visible spectrum essentially consisting of blue sensitivity and which is separated by a blue light absorbing layer (i.e. yellow filter layer) from two other silver halide emulsion layers that are green and red sensitive respectively. According to a practically useful embodiment the yellow filter layer contains yellow colloidal silver that is removable in an alkaline bleach-fixing liquid.

In order to improve the image sharpness the silver halide emulsion layers may contain screening dyes well known to those skilled in the art for reducing stray light.

According to a preferred embodiment the single step exposure of the above defined multilayer print material is effected through a multicolour master that has been produced by the following steps (I) to (VI) :

(I) providing a photographic silver halide emulsion material comprising a single silver halide emulsion layer on a transparent support,

(II) exposing said silver halide emulsion layer to form a first pixelwise built latent image of exposed silver halide,

(III) treating the exposed silver halide emulsion layer with an aqueous solution containing at least one ingredient capable of forming through the intermediary of photo-exposed silver halide a dye image,

(IV) repeating step (II) but exposing the silver halide emulsion layer material in areas different from the areas exposed in said step (II),

(V) repeating step (III) with ingredient(s) different from the one(s) used in said step (III) to form an other dye with different spectral absorption,

optionally repeating the steps (IV) and (V) to form each time a different colour pattern in other previously non-exposed areas, and

(VI) bleaching the formed silver and removing substantially all silver from the photographic material by fixing and rinsing.

In the above process the formation of the last dye pattern in the production of the multicolour master may proceed by overall exposing the single silver halide emulsion layer in order to fog the residual still light-sensitive silver halide or proceeds by chemically fogging said silver halide before colour development.

A multicolour master produced that way gives very sharp pixel areas.

According to an other embodiment the multicolour master is a classical multicolour silver halide emulsion material wherein a plurality of silver halide emulsion layers having different spectral sensitivity has been colour developed to form cyan, magenta and yellow colour pixels, that in superposition according to the principles of subtractive colour photography may form a mosaic containing red, green and blue pixels.

The single step exposure of the print material is preferably a contact exposure wherein the silver halide emulsion layer side of the multicolour master is kept in direct contact or close proximity with the imaged side, i.e. the side of the silver halide emulsion layer assemblage, of the photographic multilayer print material.

According to a first embodiment the colour processing of the print material forming a multicolour filter element according to the present invention proceeds by well known classical chromogenic development wherein the imagewise development of silver halide to silver takes place with a developing agent, e.g. of the p-phenylenediamine type, which in oxidized state couples with one or more colour couplers.

Classical colour couplers contain an active methylene group or methine group and can form with oxidized developing agent an indamine, indophenol, indoaniline or azamethine dye as described e.g. by Kurt I. Jacobson - Ralph E. Jacobson in the book "Imaging Systems" - The Focal Press - London and New York (1976) p. 68-76. Said colour processing can be a negative-positive colour processing or reversal colour processing, the latter containing a preceding black-and-white development of the exposed silver halide and colour development of the then fogged remaining silver halide.

According to another embodiment the colour processing for producing the multicolour filter element proceeds by dye destruction using a dye-bleach process as described e.g. in the above mentioned book titled "Imaging Systems" p. 78-81. The multicolour filter element is formed by dye destruction using the silver obtained in a black-and-white development in a dye-bleach process operating with a photographic multilayer silver halide emulsion material already incorporating yellow, magenta and cyan azo dyes in blue, green and red sensitive negative working silver halide emulsion layers respectively so that a mosaic of red, green and blue image pixels is formed by effecting the exposure of step (II) through a multicolour master containing said pixels.

According to a modified embodiment of said dye bleach colour processing the multicolour filter elements are formed by dye destruction using the silver obtained in a black-and-white development in a dye-bleach process operating with photographic multilayer silver halide emulsion materials already incorporating yellow, magenta and cyan azo dyes in blue, green and red sensitive silver halide emulsion layers respectively, said silver halide emulsion layers being of the direct positive working type, i.e. wherein in their non-exposed areas silver metal is obtained by development and in their exposed areas such is not. Bysaid modified embodiment from a multicolour master containing yellow, magenta and cyan image parts filter elements are produced containing blue, green and red image parts.

According to still another embodiment the colour processing for producing said multicolour filter element proceeds by a dye diffusion transfer process wherein the images left (retained) in photographic dye diffusion transfer materials after image-wise removal of mobile or mobilized dyes are used as final photographic products containing a silver image and dye image(s) in superposition and wherefrom silver is removed by bleach-fixing.

The terminology "retained image" is used amongst others in the periodical Research Disclosure (No. 17362) of December 1978 and several embodiments of the dye diffusion transfer process suited for producing a retained image are described by Christian C. Van de Sande in Angew. Chem. Int. Ed. Engl. 22 (1983) 191-209.

According to a preferred embodiment the dye formation in the production of the multicolour master used as original in the single step exposure according to the present invention proceeds by chromogenic development wherein a developing agent for exposed silver halide in oxidized state is coupled with a coupling agent to form a dye.

More particularly in a preferred embodiment of step (III) of the above defined embodiment according to

the present invention the treating of the exposed silver halide for producing the multicolour master proceeds with an aqueous solution containing (i) a chromogenic developing agent for the exposed silver halide and (ii) a coupling agent to form with the oxidized developing agent a dye.

Chromogenic development wherein the dye forming substances are supplied to the photographic material from an alkaline aqueous developer solution is known from the KODACHROME (trade name) process. The principles and details of said process are described e.g. by P. Glafkidès in the already mentioned book "Photographic Chemistry" - Vol. 2 - Fountain Press - (1960), p. 626-627, and by R.A.J. Roosen, K.G.M Staes and R.G.L. Verbrugghe in the book "Color : Theory and Imaging Systems" - Society of Photographic Scientists and Engineers 1330 Massachusetts Avenue, N.W. Washington, D.C. 20005 (1973), p. 232-233 and 235.

The KODACHROME (trade name) process operates with three superposed differently spectrally sensitized silver halide emulsion layers to form after a one-shot image-wise exposure a multicolour image with superposed successively dye developed layers according to the principles of the subtractive colour process.

The herein defined method for the formation of a patterned full-colour filter element serving as multicolour master in the mass production in series of full-colour filter elements is particularly suited for the production of filter elements comprising line or mosaic type areas in the three secondary colours also called subtractive colours yellow, magenta and cyan.

In a preferred embodiment for the production of the multicolour master containing separate yellow, magenta and cyan areas a single silver halide emulsion layer of a photographic material having a transparent support is subjected to the following steps :

(i) is first exposed to a light pattern corresponding with one of the primary colours blue, green or red,
(ii) the exposed photographic material is then developed in a chromogenic developer comprising a chromogenic developing agent and a first coupling agent for forming a yellow, magenta or cyan dye with oxidized developing agent hereby forming simultaneously a black silver metal image leaving in the non-exposed part of the photographic material still photosensitive silver halide,
(iii) after completing the first development the photographic material is washed to remove the developer,
(iv) the above exposure, development and washing are repeated twice, each time developing other areas still containing photosensitive silver halide to obtain finally a multicolour patterned filter element comprising separate yellow, magenta and cyan areas in one single layer, and
(v) after washing the photographic material following the last colour development step all silver is bleached and removed by fixing and washing.

According to a modified embodiment the last exposure is an overall exposure for fogging the remaining light-sensitive silver halide or said silver halide is chemically fogged before its colour development. Suitable fogging agents are e.g. hydrazine sulphate, thiourea, allyl-thiourea, triethylamino-borane, sodium stannite and reductones.

The colour formed in chromogenic development can be obtained by using a single colour coupler in each chromogenic development or a mixture of different colour couplers. For example, the formation of blue coloured areas proceeds by using a colour coupler that produces a monochromatic blue dye or by a mixture of colour couplers wherein one coupler produces a cyan dye and an other coupler a magenta dye. These dyes absorb respectively red and green light so that only blue light is transmitted or reflected.

According to a preferred embodiment intermixing of dyes formed in the differently chromogenically developed areas is prevented by having each chromogenic development followed by a silver bleaching step converting metallic image silver and also optionally still present latent image silver into silver halide or by black-and-white full scale development (developing-out development) in order to avoid that exposed and developable silver halide is still available in an area that just before had been subjected to one of the chromogenic developments. Operating that way spectrally very pure colours in the differently coloured areas of the multicolour master can be obtained.

According to a convenient method of carrying out the pattern-wise exposures for forming the multicolour master the exposures are made through a mask having apertures corresponding with the areas to be exposed. The exposure to form the multicolour master may be a contact exposure or a projection exposure using a lens type system for focussing purposes. In an other way of exposure use is made of a modulated laser beam.

According to a first embodiment a same mask with square size apertures is used for all the exposures but after each chromogenic development the mask is moved before starting the following exposure within a distance corresponding with the length of the side of the square aperture plus the optional width of an interspace so that in the successive chromogenic developments adjacent differently coloured square sized areas are formed.

According to a second embodiment for each exposure a different mask is used and the different exposures are carried out in register to obtain with the different exposures a desired pattern of differently coloured areas being directly adjacent to each other or separated by a more or less wide interspace or contour line.

In chromogenic development based on a coupling reaction of an oxidized p-phenylene diamine type developing agent yellow to orange dyes are formed usually with couplers containing an open-chain active methylene group. Couplers that contain the active methylene group in a heterocyclic ring, e.g. pyrazolone ring, form magenta dyes and those that contain an active methine group (e.g. in the para-position of a phenol or naphthol) generally form cyan dyes. The dyes formed usually by chromogenic development belong to the class of azomethine (yellow and magenta) or indoaniline (cyan) dyes.

Especially useful chromogenic developing agents are listed in the following Table 1.

TABLE 1

| No. | Structural formula |
|---|---|
| 1. | 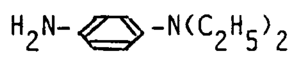 |
| 2. | 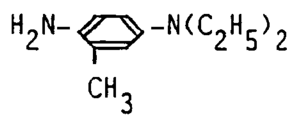 |
| 3. | 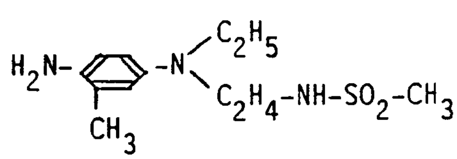 |
| 4. | 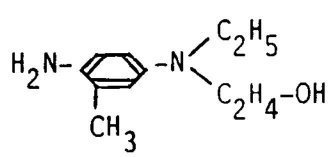 |

Examples of colour couplers that can be dissolved in an aqueous alkaline developing solution and are capable of yielding azomethine or indoaniline dyes are listed in the following Table 2.

TABLE 2

| No. | Structural formula |
|---|---|
| Yellow | |
| 1. | 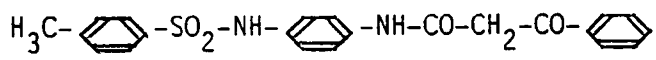 |
| 2. | 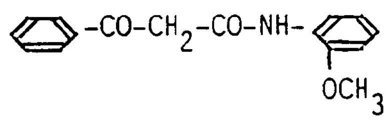 |
| 3. | 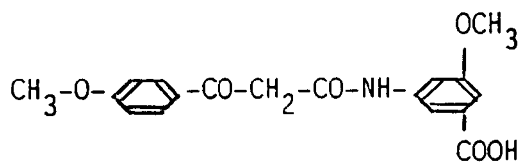 |
| 4. | 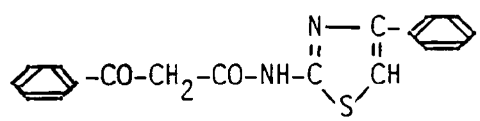 |
| 5. | 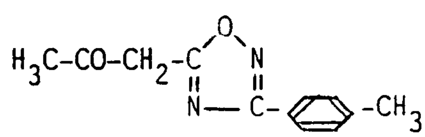 |

Magenta

6. 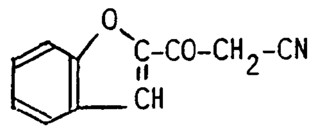

7. 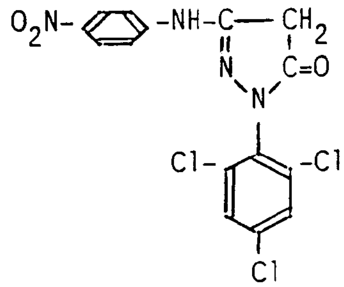

8. 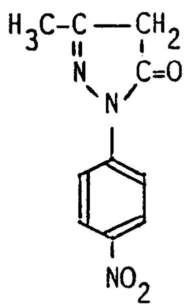

Cyan

9. 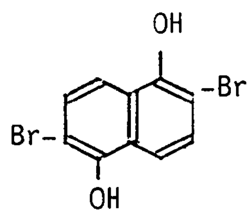

10. 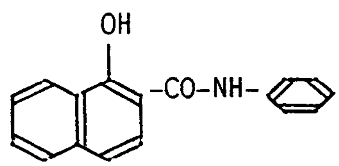

11. 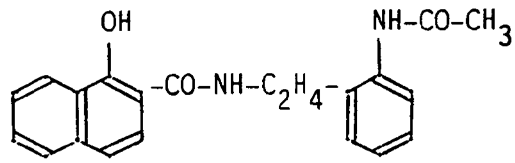

12. 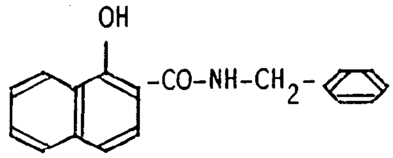

Other chromogenic coupling reactions with an oxidized developing agent result in the formation of indamine, indophenol dyes, azine, amidrazone or azo dyes as described e.g. in the book "The Theory of the Photographic Process" 4th ed. edited by T.H. James - Macmillan Publishing Co., Inc. New York, (1977) p. 337-339 and in US-P 4,004,926 and 4,514,494.

In the photographic materials for use according to the present invention the silver halide may be of any type known in the production of negative working silver halide emulsion layers. The silver halide may be silver chloride, silver chlorobromide, silver bromide, silver bromoiodide or silver chlorobromide-iodide.

The silver halide emulsion may be prepared according to techniques known to those skilled in the art, e.g. as described in Research Disclosure of December 1978, item 17643.

The average grain size of the silver halide is chosen in view of the image resolution to be obtained. Preferred for high resolution work are Lippmann emulsions wherein the average grain size is at most 0.1 μm. Details about the preparation of Lippmann emulsions can be found in the book of P. Glafkidès - "Photographic Chemistry", Vol. 1 - Fountain Press London (1958), p. 365-368. The Lippmann emulsions are advantageously prepared in the presence of silver halide grain growth restrainers, e.g. those described in US-P 3,501,313, 3,661,592, 3,704,130, 3,825,426, 3,847,617 and 4,202,695 and also in the Research Disclosure No. 9401 of Product Licensing Index, Febr. 1972.

With Lippmann-type emulsion layers patterns with excellent acutance and resolving power suited for use in the manufacture or in combination with micro-electronic devices or elements are formed. The silver halide emulsion may comprise light-screening dyes, e.g. as described in US-P 3,652,280 and in Belgian Patent (BE-P) 699,375.

The spectral sensitization of the silver halide may proceed with spectral sensitizing dyes for silver halide known to those skilled in the art. The spectral sensitization of Lippmann emulsions may be carried out as described e.g. in published French Patent Application 2,028,720.

Multicolour displays for operating according to the principles of additive colour mixing, as in multicolour mini-television sets containing a liquid crystal light valve system, have a mosaic pattern of red, green and blue pixels but the invention is not restricted to the production of said filters since other multicolour filter elements having pixel elements in other colours at will can be produced according to the present invention by changing the colour of the pixel elements in the original and/or changing the choice of dyes in the colour processing of the photographic multilayer print material.

For example, in some type of displays it may be advantageous to use multicolour filters that are obtained by using in the exposure of the print material a negative multicolour master containing blue, magenta and black pixel elements, either or not separated by a clear border line structure, the exposure being effected on a negative working colour photographic multi-silver halide emulsion layer material yielding on colour processing in the blue sensitive silver halide emulsion layer a yellow dye image, in a green sensitized silver halide emulsion layer a magenta dye image and in a red sensitized silver halide emulsion layer a cyan dye image. Alternatively a positive multicolour master containing yellow, green and white pixel elements separated by an opaque border line structure can be used as original in the exposure step (II).

Depending on the type of the desired multicolour filter and the colours present in the multicolour master used as original in the exposure of the multilayer photographic print material said multilayer material may contain negative working and/or positive working silver halide emulsion layers. Their arrangement in the multilayer multicolour photographic material may be adapted in compliance with the desired result.

The following Example illustrates the present invention without limiting it thereto. All percentages and ratios are by weight unless mentioned otherwise.

EXAMPLE

A photographic gelatin-silver halide emulsion layer containing silver bromide-iodide (3 mole % iodide) grains of an average grain size of 0.05 μm (precipitated by the double-jet technique in the presence of 13 mg of N,N'-dimethyl-dithio-oxamide per mole of silver halide) was coated at a silver halide coverage equivalent to 2.5 g of silver nitrate per m2 on a glass plate having a thickness of 1.5 mm and was in a first phase of multicolour screen formation contact-exposed with ultra-violet radiation (350 nm) through a screen having square

size apertures of 0.2 mm x 0.2 mm. The apertures were in orthogonal directions interrupted by opaque screen parts having a length of 0.4 mm and a width of 0.2 mm.

The thus exposed layer was subjected to a first colour development using a colour developer having the following composition :

| | |
|---|---|
| $(NaPO_3)_6$ | 1 g |
| KBr | 1 g |
| KI (0.1 % aqueous solution) | 10 ml |
| NaOH | 5 g |
| $Na_2SO_3$ (anhydrous) | 10 g |
| $Na_2HPO_4$ | 18 g |
| colour coupler for magenta No. 6 of Table 2 | 1.0 g |
| colour developer No. 4 of Table 1 | 3 g |
| water up to | 1000 ml |

The development was carried out for 5 minutes at 20 °C. Thereupon the plate was rinsed with water.

A black-and-white development followed the rinsing step in order to reduce traces of still developable exposed silver halide that in a next colour development would give rise to colour intermixing and consequently colour soiling. The black-and-white development was carried out for 4 minutes at 20 °C in the following developer composition :

| | |
|---|---|
| $(NaPO_3)_6$ | 2 g |
| KBr | 2 g |
| $Na_2CO_3$ (anhydrous) | 25 g |
| $Na_2SO_3$ (anhydrous) | 10 g |
| hydroquinone | 6 g |
| 1-phenyl-4-methyl-3-pyrazolidinone | 0.5 g |
| water up to | 1000 ml |

The photographic emulsion layer was rinsed again with water and dried.

In a second phase the dried photographic silver halide emulsion layer was subjected to a contact-exposure wherein the screen of the first exposure was moved up an increment of 0.2 mm with respect to the first exposure.

Colour development was repeated with the difference that now the colour coupler for yellow of Table 2 was used in an amount of 1.0 g.

Rinsing, black-and-white development and re-rinsing were carried out as described above.

In a third phase the dried photographic silver halide emulsion layer was subjected to a contact-exposure wherein the screen of the first exposure was moved up an increment of 0.4 mm with respect to the first exposure.

Colour development was repeated with the difference that now the colour coupler for cyan No. 9 of Table 2 was used in an amount of 1 g.

Rinsing was carried out as described above.

Thereupon the developed silver metal was removed by bleaching and fixing using a bleaching bath having the following composition :

| | |
|---|---|
| KBr | 30 g |
| sodium acetate | 5 g |
| acetic acid (concentrated) | 4.8 ml |
| potassium hexacyanoferrate (II) | 5 g |
| potassium hexacyanoferrate (III) | 45 g |
| ethylenediamine tetra-acetic acid trisodium salt | 10 g |
| sodium-hydrogen sulphate | 5 g |
| water up to | 1000 ml |

and thereupon a fixing bath having the following composition :

| | |
|---|---|
| sodium hydroxide | 4 g |
| sodium metabisulphite ($Na_2S_2O_5$ anhydrous) | 9 g |
| acetic acid (concentrated) | 8 ml |
| ammonium thiosulphate | 100 g |
| water up to | 1000 ml |

A multicolour master composed of a mosaic of magenta, yellow and cyan pixels separated by a clear colourless contour line was obtained.

The multicolour master was used as an original in single step contact exposures of a series of photographic trilayer multicolour materials having a glass support with a thickness of 1.5 mm whereon in the order given the following layers were applied by slide hopper coating.

Blue sensitive layer

A 100 % silver chloride emulsion wherein the silver chloride grains had an average size of 0.4 µm was coated onto said glass support at a coverage of silver chloride equivalent with 0.68 g of $AgNO_3$ per m2.

Before coating the blue sensitivity of the silver chloride was increased with a spectral sensitizing agent according to structural formula SB defined furtheron.

The coating composition contained a yellow dye forming coupler according to structural formula Y1 in an amount sufficient for a coverage of 1.5 g per m2.

Further the coating composition contained an amount of gelatin sufficient for a coverage of 2.5 g per m2, an epoxysilane E for improving the adhesion of the coating to glass in an amount sufficient for a coverage of 0.1 g per m2 and dimethylol urea as hardening agent for a coverage of 0.13 g per m2.

Red sensitive layer

Onto the blue sensitive layer a red sensitive silver halide emulsion layer was applied wherein the silver halide consisted of silver chloride-bromide (90/10 molar ratio) with grains having an average size of 0.12 µm. The silver halide was applied at a coverage of silver halide equivalent with 0.64 g of $AgNO_3$ per m2.

Before coating the silver chloride-bromide grains were sensitized spectrally to red light with a spectral sensitizing agent according to structural formula SR defined furtheron.

The coating composition contained a cyan dye forming coupler according to structural formula C1 in an amount sufficient for a coverage of 1.65 g per m2.

Further the coating composition contained an amount of gelatin for a coverage of 2.5 g per m2.

Green sensitive layer

Onto the red sensitive layer a green sensitive silver halide emulsion layer was applied wherein the silver halide consisted of silver chloride-bromide (90/10 molar ratio) with grains having an average size of 0.12 µm.

The silver halide was applied at a coverage of silver halide equivalent with 0.64 g of $AgNO_3$ per m2.

Before coating the silver chloride-bromide grains were sensitized spectrally to green light with a spectral sensitizing agent according to structural formula SG defined furtheron.

The coating composition contained a magenta dye forming coupler according to structural formula M1 in an amount sufficient for a coverage of 1.65 g per m2 and hydroxydichlorotriazine as hardening agent in an amount sufficient for a coverage of 0.035 g per m2.

Further the coating composition contained an amount of gelatin for a coverage of 1.5 g per m2.

After its contact exposure each trilayer multicolour material was treated for 5 minutes at 20 °C with the following developing composition :

| | |
|---|---|
| sodium sulphite (anhydrous) | 4 g |
| 2-amino-5-diethylamino-toluene hydrochloride | 3 g |
| sodium carbonate (anhydrous) | 17 g |
| sodium bromide | 1.7g |
| sulphuric acid 7 N | 0.62 ml |
| water up to | 1000 ml |

Thereupon the material was treated in an acid stop bath prepared by adding water up to 1l to 50 ml of of sulphuric acid 7 N.

The treatment with stop bath was followed by 2 minutes rinsing in plain water followed by a 2 minutes fixing in an aqueous solution having the following composition :

| | |
|---|---|
| 58 % aqueous solution of $(NH_4)_2S_2O_3$ | 100 ml |
| sodium sulphite (anhydrous) | 2.5 g |
| sodium-hydrogen sulphite (anhydrous) | 10.3 g |
| water up to | 1000 ml |

The treatment with fixing liquid was followed by a 2 minutes rinsing in plain water followed by a 3 minutes bleaching in an aqueous solution having the following composition :

| | |
|---|---|
| potassium hexacyanoferrate (III) (anhydrous) | 30 g |
| sodium bromide (anhydrous) | 17 g |
| water up to | 1000 ml |

Thereupon the material was treated with the fixing liquid again and rinsed for 3 minutes with plain water.

Finally the material was treated with an aqueous solution having a pH of 9 and containing per liter 20 ml of a 40 % aqueous solution of formaldehyde serving as hardening agent.

The processed gelatin-silver halide emulsion layer assemblage representing a full-colour mosaic for reducing its waterpermeability and improving its wet strength and reducing its moisture sensitivity was treated at 20 °C for 10 seconds with an aqueous solution having the following composition :

| | |
|---|---|
| "Reaction product R" (as defined hereinbefore) | 200 g |
| water | 750 ml |

After drying the thus treated assemblage was coated with a protective resin layer as described in US-P 4,668,601 Example 25, forming a UV cured layer having a thickness of 10 micron. On the cured water-impermeable layer having excellent electrical insulation by known vapour deposition under high vacuum a transparent common electrode layer of indium-tin oxide was applied.

The accompanying drawing represents a diagrammatic cross-sectional view of a liquid crystal display device of the twisted nematic type containing a multicolour filter element produced as described in the present example.

In said drawing element 10 is a glass plate being coated with :

(1) a matrix of pixel electrodes 11 each individually connected with a polysilicon thin-film transistor (TFT not shown in the drawing),

(2) a liquid crystal layer 12 of the twisted nematic type (TN).

A second glass plate 13 is coated at the side directed towards the first glass plate 10 with :

(i) a multi-colour filter array 15 produced according to the present example on a glass support by means of a triple silver emulsion layer assembly containing formed by the principles of subtractive colour photography red (R), green (G) and blue (B) pixel areas separated by a black contour line (L),

(ii) a hydrophobic water-impermeable resin layer 16,

(ii) a common continuous transparent electrode 14, e.g. made of vapour deposited indium-tin oxide (ITO),

A spacer element 19 defines the overall gap-width and keeps the liquid crystal layer 12 containing liquid crystals of the twisted nematic type (TNT) in the gap between the electrodes 11 and 14.

The aligning layers orientating the liquid crystal molecules of the nematic type in a spiral staircase (twisted) pattern are not shown in the drawing but are arranged on the sides of the electrodes facing the liquid crystal layer.

Polarizer layers 17 and 18 are arranged as outermost elements having their polarizing plane parallel whereby they operate the display in the so-called reverse contrast mode wherein the areas corresponding in "ON" state with energized electrode pixels transmit light and the areas corresponding in "OFF" state with non-energized electrode pixels block that light (ref. published EP-A 0 179 922).

Structural formulae

Spectral sensitizing agents

SB

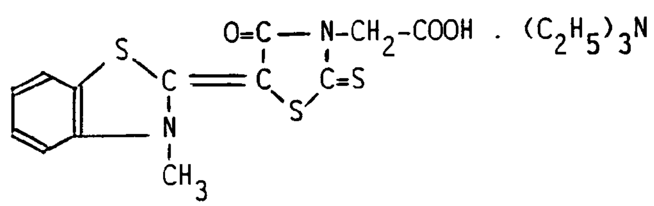

SR

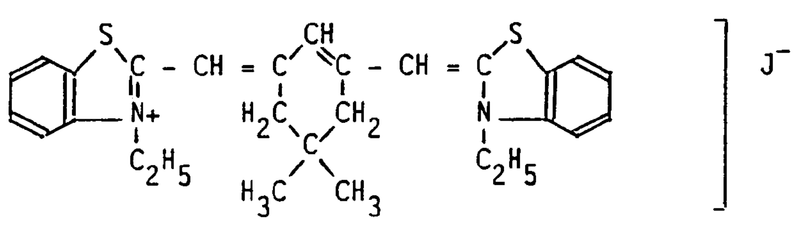

SG

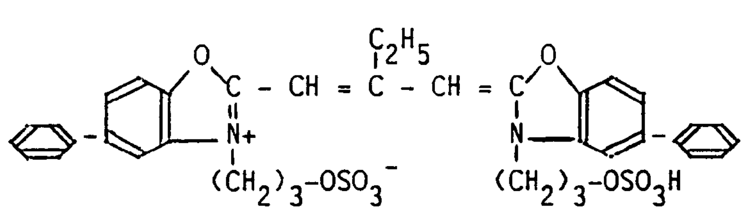

Colour couplers

Y1

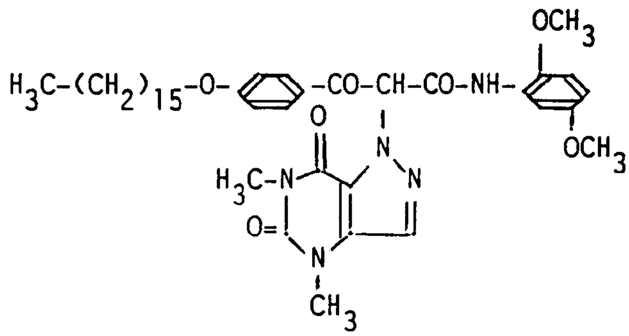

C1

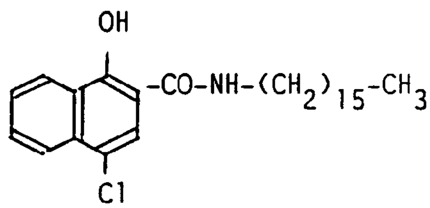

M1

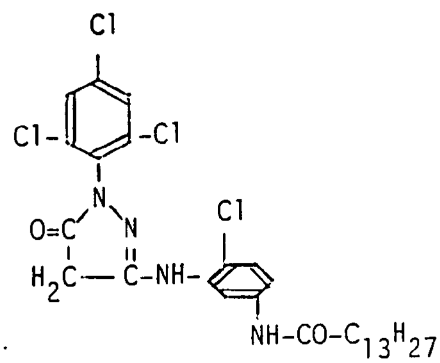

Epoxysilane E

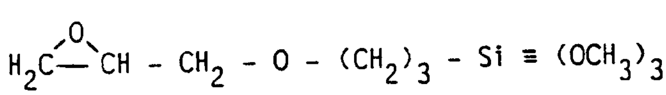

**Claims**

1. A process for the production of a structure comprising a multicolour filter (15) and a transparent electrode layer which structure is adapted for the manufacture of a multicolour liquid crystal display device comprising between a pair of electrodes (11,14) a liquid crystal layer (12) essentially consisting of nematic crystals in twisted or supertwisted configuration or smectic C (chiral smectic) ferroelectric liquid crystals

wherein the liquid crystal molecules are aligned in such a way that said liquid crystal layer shows an electrically controllable rotation of the polarization plane of light transmitted therethrough, when altering pixelwise the electric field over the liquid crystal layer, and said electrodes (11,14) are associated respectively with a front and rear light polarizer element (17,18), which process comprises in consecutive order the steps of :

(1) providing a photographic print material that contains on a glass support (13) a plurality of differently spectrally sensitive silver halide emulsion layers forming a silver halide emulsion layer assemblage,
(2) subjecting said print material to a single step multicolour pixelwise exposure,
(3) colour processing said exposed print material producing thereby in each silver halide emulsion layer a differently coloured pixel pattern,
(4) coating said colour processed print material at its silver halide emulsion layer assemblage side with a hydrophobic water-impermeable organic resin layer (16), and
(5) depositing by vacuum-coating said transparent electrode layer (14) on said organic resin layer (16) serving as a covering layer for said processed silver halide emulsion layer assemblage forming said multicolour filter (15).

2. A process according to claim 1, wherein said covering layer is made of a polymeric resin material having a high specific electric resistivity of at least $10^{10}$ ohm.cm.

3. A process according to claim 1 or 2, wherein said covering layer has a thickness in the range of 1 to 10 micron.

4. A process according to any of the claims 1 to 3, wherein the covering layer is made of a hydrophobic crosslinkable polymer or prepolymer-monomer composition that is curable by ultra-violet light and cross-linked by free-radical polymerization with the aid of a substance that produces free radicals on UV irradiation.

5. A process according to claim 4, wherein said monomers for providing a cross-linking reaction are selected from the group of hexane diol diacrylate, silicone diacrylate, trimethylolpropane triacrylate, aliphatic and aromatic urethane acrylates, glycidyl acrylate, and mixtures of these monomers, and the monomers solvents for the prepolymers used.

6. A process according to claim 4 or 5, wherein the prepolymers are selected from the group of polyester acrylates, epoxy resin acrylates, urethane acrylate and urethane diacrylate compounds.

7. A process according to any of the claims 1 to 3, wherein the covering layer is made of a hydrophobic crosslinkable polymer that is curable by heat.

8. A process according to claim 7, wherein the heat curable polymer is an epoxy resin that can be cured with amines and/or anhydrides.

9. A process according to any of the preceding claims, wherein the glass support has been pre-subbed with silicon compounds.

10. A process according to any of the preceding claims, wherein said photographic print material before its exposure comprises a transparent glass support coated with three differently spectrally sensitive silver halide emulsion layers one of which has a spectral sensitivity in the visible spectrum essentially consisting of sensitivity to blue light and contains a colour coupler for forming in colour development a yellow dye, the other two silver halide emulsion layers are sensitive to green and red light respectively but are essentially insensitive to blue light and contain a colour coupler for forming in colour development a magenta and cyan dye respectively.

11. A process according to any of the claims 1 to 9, wherein said photographic print material comprises before its exposure a transparent glass support coated with three differently spectrally sensitive silver halide emulsion layers one of which has a spectral sensitivity in the visible spectrum essentially consisting of sensitivity to blue light and contains a yellow dye that can be destroyed according to the principles of the dye-bleach process with the aid of developed silver, the other two silver halide emulsion layers are sensitive to green and red light respectively but essentially insensitive to blue light and contain respectively a magenta and cyan dye that can be destroyed according to principles of the dye-bleach process with the aid of developed silver.

**12.** A process according to any of the claims 1 to 9, wherein said photographic print material contains before its exposure an outermost silver halide emulsion layer that in the visible spectrum has a spectral sensitivity essentially consisting of blue sensitivity and which is separated by a blue light absorbing layer (i.e. yellow filter layer) from two other silver halide emulsion layers that are green and red sensitive respectively.

**13.** A process according to any of the preceding claims, wherein the single step exposure of said multilayer print material is effected through a multicolour master that has been produced by the following steps (I) to (VI):
(I) providing a photographic silver halide emulsion material comprising a single silver halide emulsion layer on a transparent support,
(II) exposing said silver halide emulsion layer to form a first pixelwise built latent image of exposed silver halide,
(III) treating the exposed silver halide emulsion layer with an aqueous solution containing at least one ingredient capable of forming through the intermediary of photo-exposed silver halide a dye image,
(IV) repeating step (II) but exposing the silver halide emulsion layer material in areas different from the areas exposed in said step (II),
(V) repeating step (III) with ingredient(s) different from the one(s) used in said step (III) to form an other dye with different spectral absorption, optionally repeating the steps (IV) and (V) to form each time a different colour pattern in other previously non-exposed areas, and
(VI) bleaching the formed silver and removing substantially all silver from the photographic material by fixing and rinsing.

**14.** A process according to claim 13, wherein the formation of the last dye pattern in the production of the multicolour master proceeds by overall exposing the photographic material comprising only one photographic silver halide emulsion layer in order to fog the residual still light-sensitive silver halide or proceeds by chemically fogging said silver halide before colour development.

**15.** A process according to claim 13 or 14, wherein step (III) consists of the treating of the exposed silver halide emulsion layer with an aqueous solution containing (1) a chromogenic developing agent for the exposed silver halide and a (2) coupling agent to form with the oxidized developing agent a dye.

**16.** A process according to any of the claims 13 to 15, wherein for forming a multicolour master containing separate yellow, magenta and cyan areas a single silver halide emulsion layer of a photographic material having a transparent support is subjected to the following steps :
(i) is first exposed to a light pattern corresponding with one of the primary colours blue, green or red,
(ii) the exposed photographic material is then developed in a chromogenic developer comprising a chromogenic developing agent and a first coupling agent for forming a yellow, magenta or cyan dye with oxidized developing agent hereby forming simultaneously a black silver metal image leaving in the non-exposed part of the photographic material still photosensitive silver halide,
(iii) after completing the first development the photographic material is washed to remove the developer,
(iv) the above exposure, development and washing are repeated twice, each time developing other areas still containing photosensitive silver halide to finally obtain a multicolour patterned filter element comprising separate yellow, magenta and cyan areas in one single layer, and
(v) after washing the photographic material following the last colour development step all silver is bleached and removed by fixing and washing.

**17.** A process according to claim 15 or 16, wherein each chromogenic development of the photographic material comprising said single silver halide emulsion layer is followed by a silver bleaching step converting metallic image silver and also optionally still present latent image silver into silver halide or by a black-and-white full scale development (developing-out development) in order to avoid that exposed and developable silver halide is still available in an area that just before had been subjected to one of the chromogenic developments.

**18.** A process according to any of the claims 13 to 17, wherein a same mask with square size apertures is used for all the exposures of the photographic material comprising only one silver halide emulsion layer but after each chromogenic development the mask is moved before the following exposure within a distance corresponding with the length of the side of the square aperture plus the optional width of an interspace so that in the successive chromogenic developments adjacent differently coloured square sized areas are formed.

**19.** A process according to any of the claims 13 to 18, wherein for each exposure of the photographic material comprising said single silver halide emulsion layer a different mask is used and the different exposures are carried out in register with respect to the photographic material to obtain with the different exposures a desired pattern of differently coloured areas being directly adjacent to each other or separated by a contour line.

**20.** A process according to any of the claims 13 to 19, wherein the average grain size of the silver halide in the silver halide emulsion layer of said photographic material comprising only one silver halide emulsion layer is not larger than 0.1 um.

**21.** A process according to any of the claims 13 to 20, wherein in said exposed multilayer silver halide emulsion print material silver halide is developed to silver with a developing agent which in oxidized state couples with one or more colour couplers.

**22.** A process according to any of the claims 13 to 21, wherein said exposed multilayer print material is colour processed by dye destruction using silver obtained in a black-and-white development in a dye-bleach process operating with said multilayer silver halide emulsion print material already incorporating yellow, magenta and cyan azo dyes respectively in a blue, green and red sensitive negative working silver halide emulsion layer.

**23.** A process according to any of the claims 13 to 21, wherein in said exposed multilayer silver halide emulsion print material the multicolour filter element is formed by dye destruction using the silver obtained in a black-and-white development in a dye-bleach process operating with a photographic multilayer silver halide emulsion material already incorporating yellow, magenta and cyan azo dyes respectively in a blue, green and red sensitive silver halide emulsion layer of the direct positive working type, i.e. wherein in the non-exposed areas silver metal is obtained by development and in the exposed areas such is not.

**24.** A process according to any of the claims 1 to 12, wherein said silver halide emulsion layer assemblage before carrying out step (4) is made less permeable to water by hardening the hydrophilic colloid binder thereof.

**25.** A process according to claim 24, wherein said hydrophilic colloid binder is gelatin which is hardened with a hardening agent containing a plurality of epoxy groups.

**26.** A multicolour liquid crystal display device comprising between a pair of electrodes (11,14) a liquid crystal layer (12) essentially consisting of nematic crystals in twisted or supertwisted configuration or smectic C (chiral smectic) ferroelectric liquid crystals wherein the liquid crystal molecules are aligned in such a way that said layer shows an electrically controllable rotation of the polarization plane of light transmitted therethrough, when altering pixelwise the electric field over the liquid crystal layer (12), and said electrodes (11,14) are associated respectively with a front and rear light polarizer element (17,18), wherein said device further comprises a multicolour filter element (15) which is made of a colour processed silver halide emulsion layer material having an assemblage of a plurality of different spectrally sensitive silver halide emulsion layers coated on a glass support (13), and said multicolour filter element at ts silver halide emulsion layer assemblage side is coated with a hydrophobic water-impermeable organic resin layer (16) whereon one of said electrodes (14) making direct contact with said liquid crystal layer is present.

## Patentansprüche

**1.** Ein Herstellungsverfahren für ein Gefüge, das ein Mehrfarbenfilter (15) und eine transparente Elektrodenschicht umfaßt, welches Gefüge zur Herstellung einer mehrfarbigen Flüssigkristallanzeigevorrichtung ausgelegt wurde, welche Vorrichtung zwischen einem Elektrodenpaar (11, 14) eine Flüssigkristallschicht (12) umfaßt, die sich im wesentlichen aus nematischen Kristallen in verdrehter oder überverdrehter Anordnung oder C-smektischen (chiral smektischen). ferroelektrischen Flüssigkristallen zusammensetzt, wobei die Flüssigkristallmoleküle derart ausgerichtet wurden, daß die Flüssigkristallschicht eine elektrisch steuerbare Drehung der Polarisationsebene des von ihr durchgelassenen Lichtes aufweist, wenn das

elektrische Feld an der Flüssigkristallschicht bildelementgemäß abgeändert wird, und die Elektroden (11, 14) mit einem vorderen bzw. rückwärtigen Lichtpolarisatorelement (17. 18) verknüpft sind, welches Verfahren der Reihenfolge nach folgende Schritte umfaßt :

(1) ein fotografisches Kopiermaterial wird bereitgestellt. das auf einem Glasträger (13) eine Vielzahl von Silberhalogenidemulsionsschichten unterschiedlicher Spektralempfindlichkeit enthält, die eine Silberhalogenidemulsionsschichtmontage bilden,

(2) das Kopiermaterial wird einer bildelementmäßigen Einzelschritt-Mehrfarbenbelichtung unterzogen,

(3) das belichtete Kopiermaterial wird einer Farbverarbeitung unterzogen. infolge der in jeder Silberhalogenidemulsionsschicht ein unterschiedlich gefärbtes Bildelementmuster erzeugt wird,

(4) das der Farbverarbeitung unterzogene Kopiermaterial wird auf seiner Silberhalogenidemulsionsschichtmontageseite mit einer hydrophoben, wasserundurchlässigen, organischen Harzschicht (16) überzogen, und

(5) die durchsichtige Elektrodenschicht (14) wird durch Vakuumbeschichtung auf die organische Harzschicht (16), die als Deckschicht für die verarbeitete Silberhalogenidemulsionsschichtmontage dient, die das Mehrfarbenfilter (15) bildet, abgeschieden.

**2.** Ein Verfahren nach Anspruch 1, dadurch gekennzeichnet, daß die Deckschicht aus einem polymeren Harzmaterial mit einem hohen spezifischen elektrischen Widerstand von wenigstens $10^{10}$ $\Omega$.cm angefertigt wurde.

**3.** Ein Verfahren nach Anspruch 1 oder 2, dadurch gekennzeichnet, daß die Deckschicht eine Stärke im Bereich von 1 bis 10 $\mu$m aufweist.

**4.** Ein Verfahren nach irgendeinem der Ansprüche 1 bis 3, dadurch gekennzeichnet, daß die Deckschicht aus einem hydrophoben, vernetzbaren Polymeren angefertigt wurde oder aus einer hydrophoben, vernetzbaren Vorpolymer/Monomer-Verbindung, die sich durch Ultraviolettlicht aushärten läßt und durch Freiradikalpolymerisation unter Verwendung eines Stoffes, der bei UV-Bestrahlung freie Radikale erzeugt, vernetzt wurde.

**5.** Ein Verfahren nach Anspruch 4, dadurch gekennzeichnet, daß die Monomeren zum Hervorrufen der Vernetzungsreaktion Hexandioldiacrylat, Silikondiacrylat, Trimethylolpropantriacrylat, aliphatische und aromatische Urethanacrylate, Glycidylacrylat, oder Gemische aus diesen Monomeren, oder die Monomerlösemittel für die eingesetzten Vorpolymeren sind.

**6.** Ein Verfahren nach Anspruch 4 oder 5, dadurch gekennzeichnet, daß die Vorpolymeren Polyesteracrylate, Epoxidharzacrylate, Urethanacrylat- oder Urethandiacrylatverbindungen sind.

**7.** Ein Verfahren nach irgendeinem der Ansprüche 1 bis 3, dadurch gekennzeichnet, daß die Deckschicht aus einem hydrophoben, vernetzbaren Polymeren, das sich durch Wärme aushärten läßt, angefertigt wurde.

**8.** Ein Verfahren nach Anspruch 7, dadurch gekennzeichnet, daß das wärmeaushärtbare Polymere ein Epoxidharz ist, das sich mit Aminen und/oder Anhydriden aushärten läßt.

**9.** Ein Verfahren nach irgendeinem der vorstehenden Ansprüche, dadurch gekennzeichnet, daß der Glasträger mit Siliciumverbindungen vorsubstriert worden ist.

**10.** Ein Verfahren nach irgendeinem der vorstehenden Ansprüche, dadurch gekennzeichnet, daß das fotografische Kopiermaterial vor dessen Belichtung einen transparenten Glasträger umfaßt, auf den drei Silberhalogenidemulsionsschichten unterschiedlicher Spektralempfindlichkeit aufgetragen wurden, wobei eine dieser Schichten eine Spektralempfindlichkeit im sichtbaren Spektrum, die im wesentlichen aus Empfindlichkeit für Blaulicht besteht, aufweist und einen Farbstoffbildner zur Bildung eines Gelbfarbstoffes bei der Farbentwicklung enthält, und die zwei übrigen Silberhalogenidemulsionsschichten empfindlich sind für Grün- bzw. Rotlicht aber im wesentlichen unempfindlich für Blaulicht und einen Farbstoffbildner zur Bildung eines Purpur- bzw. Blaugrünfarbstoffes bei der Farbentwicklung enthalten.

**11.** Ein Verfahren nach irgendeinem der Ansprüche 1 bis 9, dadurch gekennzeichnet, daß das fotografische Kopiermaterial vor dessen Belichtung einen transparenten Glasträger umfaßt, auf den drei Silberhalogenidemulsionsschichten unterschiedlicher Spektralempfindlichkeit aufgetragen wurden, wobei eine dieser Schichten eine Spektralempfindlichkeit im sichtbaren Spektrum, die im wesentlichen aus Empfindlichkeit für Blaulicht besteht, aufweist und einen Gelbfarbstoff, der sich nach den Prinzipien des Farbstoffbleichverfahrens unter Verwendung von entwickeltem Silber zerstören läßt, enthält, und die zwei übrigen Silberhalogenidemulsionsschichten empfindlich sind für Grün- bzw. Rotlicht aber im wesentlichen unempfindlich für Blaulicht und einen Purpur- bzw. Blaugrünfarbstoff, die sich nach den Prinzipien des Farbstoffbleichverfahrens unter Verwendung von entwickeltem Silber zerstören lassen, enthalten.

**12.** Ein Verfahren nach irgendeinem der Ansprüche 1 bis 9, dadurch gekennzeichnet, daß das fotografische Kopiermaterial vor dessen Belichtung eine äußere Silberhalogenidemulsionsschicht enthält, die im sichtbaren Spektrum eine Spektralempfindlichkeit aufweist, die im wesentlichen aus Blauempfindlichkeit besteht und durch eine Blaulicht absorbierende Schicht (d.h. eine Gelbfilterschicht) von zwei anderen Silberhalogenidemulsionsschichten, die grün- bzw. rotempfindlich sind, getrennt wird.

**13.** Ein Verfahren nach irgendeinem der vorstehenden Ansprüche, dadurch gekennzeichnet, daß die Einzelschrittbelichtung des Mehrschichten-Kopiermaterials über ein Mehrfarbenmutterbild durchgeführt wird, das durch die folgenden Schritte (I) bis (VI) erzeugt worden ist :

(I) ein fotografisches Silberhalogenidemulsionsmaterial wird bereitgestellt, das eine einzelne Silberhalogenidemulsionsschicht auf einem transparenten Träger umfaßt,

(II) die Silberhalogenidemulsionsschicht wird belichtet. so daß sich ein erstes bildelementgemäß aufgebautes Latentbild aus belichtetem Silberhalogenid bildet,

(III) die belichtete Silberhalogenidemulsionsschicht wird behandelt mit einer wäßrigen Lösung, die wenigstens ein Ingrediens enthält, das unter Verwendung von fotobelichtetem Silberhalogenid der Erzeugung eines Farbstoffbilds fähig ist,

(IV) der Verfahrensschritt (II) wird wiederholt, jedoch wird das Silberhalogenidemulsionsschichtmaterial in Flächen, die sich von den im Schritt (II) belichteten Flächen unterscheiden, belichtet,

(V) der Verfahrensschritt (III) wird wiederholt allerdings mit einem oder mehreren anderen als im Schritt (III) eingesetzten Ingredienzien, so daß sich ein anderer Farbstoff mit unterschiedlicher Spektralabsorption bildet, wahlweise werden die Schritte (IV) und (V) wiederholt, so daß sich jeweils ein unterschiedliches Farbmuster auf anderen früher unbelichteten Flächen bildet, und

(VI) das erzeugte Silber wird gebleicht und fast alles Silber wird durch Fixieren und Wässern aus dem fotografischen Material entfernt.

**14.** Ein Verfahren nach Anspruch 13, dadurch gekennzeichnet. daß die Erzeugung des letzten Farbstoffmusters bei der Erstellung des Mehrfarbenmutterbilds erfolgt, indem das fotografische Material, das nur eine fotografische Silberhalogenidemulsionsschicht umfaßt, gleichmäßig belichtet wird, damit das noch immer lichtempfindliche Restsilberhalogenid geschleiert wird oder erfolgt, indem letztgenanntes Silberhalogenid vor der Farbentwicklung auf chemischem Wege geschleiert wird.

**15.** Ein Verfahren nach Anspruch 13 oder 14, dadurch gekennzeichnet, daß der Schritt (III) darin besteht, die belichtete Silberhalogenidemulsionsschicht zu behandeln mit einer wäßrigen Lösung, die

(1) eine Farbentwicklungssubstanz für das belichtete Silberhalogenid und

(2) einen Kuppler, der mit der oxidierten Entwicklungssubstanz einen Farbstoff bildet, enthält.

**16.** Ein Verfahren nach irgendeinem der Ansprüche 13 bis 15, dadurch gekennzeichnet, daß zur Erzeugung eines Mehrfarbenmutterbilds, das getrennte Gelb-, Purpur- und Blaugrünflächen enthält, eine einzelne Silberhalogenidemulsionsschicht eines fotografischen Materials mit transparentem Träger den folgenden Schritten unterzogen wird :

(i) sie wird zuerst an einem Lichtmuster belichtet, das einer der Grundfarben Blau, Grün oder Rot entspricht:

(ii) das belichtete fotografische Material wird dann entwickelt in einem Farbentwickler, der eine Farbentwicklungssubstanz und einen ersten Kuppler umfaßt, der mit der oxidierten Entwicklungssubstanz einen Gelb-, Purpur- oder Blaugrünfarbstoff bildet, wobei gleichzeitig ein schwarzes Silbermetallbild erzeugt wird und in dem unbelichteten Bereich des fotografischen Materials noch immer fotoempfindliches Silberhalogenid zurückbleibt,

(iii) nach Beendigung der ersten Entwicklung wird das fotografische Material zur Entfernung des Entwicklers gewaschen,

(iv) die eingangs genannten Belichtungs-, Entwicklungs- und Waschvorgänge werden zweimal wiederholt, wobei jeweils andere Flächen, die noch immer fotoempfindliches Silberhalogenid enthalten, entwickelt werden, so daß zuletzt ein mehrfarbiges gemustertes Filter erhalten wird, das getrennte Gelb-, Purpur- und Blaugrünflächen in einer einzelnen Schicht umfaßt, und

(v) nachdem das fotografische Material anschließend an den letzten Farbentwicklungsschritt gewaschen wurde, wird all das Silber durch Fixieren und Waschen gebleicht und entfernt.

**17.** Ein Verfahren nach Anspruch 15 oder 16, dadurch gekennzeichnet, daß nach jeder Farbentwicklung des fotografischen Materials, das diese einzelne Silberhalogenidemulsionsschicht umfaßt, ein Silberbleichschritt kommt, der metallisches Bildsilber sowie gegebenenfalls noch verbleibendes Latentbildsilber zu Silberhalogenid umwandelt, oder eine volle Schwarzweißentwicklung (forcierte Entwicklung) kommt, um zu vermeiden, daß an einer Fläche, die unmittelbar davor einer der Farbentwicklungen unterzogen wurde, noch immer belichtetes und entwickelbares Silberhalogenid übrigbleiben würde.

**18.** Ein Verfahren nach irgendeinem der Ansprüche 13 bis 17, dadurch gekennzeichnet, daß bei all den Belichtungen des fotografischen Materials, das diese einzelne Silberhalogenidemulsionsschicht umfaßt, eine selbe Maske mit quadratischen Öffnungen benutzt wird, aber die Maske nach jeder Farbentwicklung und vor der nächsten Belichtung versetzt wird innerhalb einer Strecke, die der Länge der Seite der Quadratöffnung plus der eventuellen Breite eines Zwischenraums entspricht, so daß sich bei den aufeinanderfolgenden Farbentwicklungen anliegende, unterschiedlich gefärbte, quadratische Flächen bilden.

**19.** Ein Verfahren nach irgendeinem der Ansprüche 13 bis 18, dadurch gekennzeichnet, daß bei jeder Belichtung des fotografischen Materials, das diese einzelne Silberhalogenidemulsionsschicht umfaßt, eine andere Maske benutzt wird und die unterschiedlichen Belichtungen registerhaltig, bezogen auf das fotografische Material, durchgeführt werden, so daß bei den unterschiedlichen Belichtungen ein verlangtes Muster von unterschiedlich gefärbten Flächen, die direkt aneinander grenzen oder von einer Umrißlinie getrennt werden, erhalten wird.

**20.** Ein Verfahren nach irgendeinem der Ansprüche 13 bis 19, dadurch gekennzeichnet, daß die mittlere Korngröße des Silberhalogenids in der Silberhalogenidemulsionsschicht des fotografischen Materials, das nur eine einzelne Silberhalogenidemulsionsschicht umfaßt, nicht mehr als 0,1 $\mu$m beträgt.

**21.** Ein Verfahren nach irgendeinem der Ansprüche 13 bis 20, dadurch gekennzeichnet, daß in dem belichteten Silberhalogenidemulsions-Mehrschichten-Kopiermaterial unter Verwendung einer Entwicklersubstanz, die im oxidierten Zustand mit einem oder mehreren Farbstoffbildnern kuppelt, Silberhalogenid zu Silber entwickelt wird.

**22.** Ein Verfahren nach irgendeinem der Ansprüche 13 bis 21, dadurch gekennzeichnet, daß das belichtete Mehrschichten-Kopiermaterial einer Farbverarbeitung durch Farbstoffzerstörung unterzogen wird unter Verwendung des Silbers, das erhalten wurde bei einer Schwarzweißentwicklung bei einem Farbstoffbleichverfahren, das mit dem Silberhalogenidemulsions-Mehrschichten-Kopiermaterial verläuft, das bereits gelbe, purpurne und blaugrüne Azofarbstoffe in einer blau-, grün- bzw. rotempfindlichen, negativarbeitenden Silberhalogenidemulsionsschicht enthält.

**23.** Ein Verfahren nach irgendeinem der Ansprüche 13 bis 21, dadurch gekennzeichnet, daß sich das Mehrfarbenfilterelement in dem belichteten Silberhalogenidemulsions-Mehrschichten-Kopiermaterial durch Farbstoffzerstörung bildet unter Verwendung des Silbers, das erhalten wurde bei einer Schwarzweißentwicklung bei einem Farbstoffbleichverfahren, das mit einem fotografischen Silberhalogenidemulsions-Mehrschichtenmaterial verläuft, das bereits gelbe, purpurne und blaugrüne Azofarbstoffe in einer blau-, grün- bzw. rotempfindlichen Silberhalogenidemulsionsschicht vom direktpositivarbeitenden Typ enthält, d.h. ein Typ, wobei bei der Entwicklung in den unbelichteten Flächen Silbermetall und in den belichteten Flächen kein Silbermetall erhalten wird.

**24.** Ein Verfahren nach irgendeinem der Ansprüche 1 bis 12, dadurch gekennzeichnet, daß die Silberhalogenidemulsionsschichtmontage vor der Durchführung des Schritts (4) weniger wasserdurchlässig gemacht wird, indem deren hydrophiles Kolloidbindemittel gehärtet wird.

**25.** Ein Verfahren nach Anspruch 24. dadurch gekennzeichnet, daß das hydrophile Kolloidbindemittel Gelatine ist, die mit einem Härtemittel, das eine Vielzahl von Epoxygruppen enthält, gehärtet wurde.

26. Eine mehrfarbige Flüssigkristallanzeigevorrichtung, die zwischen einem Elektrodenpaar (11, 14) eine Flüssigkristallschicht (12) umfaßt, die sich im wesentlichen aus nematischen Kristallen in verdrehter oder überverdrehter Anordnung oder C-smektischen (chiral smektischen), ferroelektrischen Flüssigkristallen zusammensetzt, wobei die Flüssigkristallmoleküle derart ausgerichtet wurden, daß diese Schicht eine elektrisch steuerbare Drehung der Polarisationsebene des von ihr durchgelassenen Lichtes aufweist, wenn das elektrische Feld an der Flüssigkristallschicht (12) bildelementgemäß abgeändert wird, und die Elektroden (11, 14) mit einem vorderen bzw. rückwärtigen Lichtpolarisatorelement (15) verknüpft sind, das angefertigt wurde aus einem einer Farbverarbeitung unterzogenen Silberhalogenidemulsionsschichtmaterial mit einer Montage aus einer Vielzahl von unterschiedlichen, auf einen Glasträger (13) aufgetragenen, spektralempfindlichen Silberhalogenidemulsionsschichten, und das Mehrfarbenfilterelement auf seiner Silberhalogenidemulsionsschichtmontageseite mit einer hydrophoben, wasserundurchlässigen, organischen Harzschicht (16) überzogen wurde, auf der eine der Elektroden (14), die einen direkten Kontakt mit der Flüssigkristallschicht herstellt, vorliegt.

## Revendications

1. Un procédé pour la fabrication d'une structure comportant un filtre polychrome (15) et une couche transparente à électrode, laquelle structure a été agencée pour la fabrication d'un dispositif d'affichage polychrome à cristaux liquides comportant entre une paire d'électrodes (11, 14) une couche à cristaux liquides (12) se constituant essentiellement de cristaux nématiques dans une configuration tordue ou surtordue ou de cristaux liquides ferroélectriques smectiques C (smectiques à chiralité), où les molécules des cristaux liquides sont tellement alignées, que la couche à cristaux liquides présente une rotation réglable par voie électrique du plan de polarisation de la lumière transmise par elle, quand le champ électrique sur la couche à cristaux liquides est modifié élément d'image par élément d'image, et les électrodes (11, 14) sont liées à un élément polariseur de lumière (17, 18) resp. avant et arrière, lequel procédé parcourt par ordre de succession les étapes suivantes :
   (1) on procure un matériau photographique de copie, qui contient sur un support de verre (13) une multiplicité de couches d'émulsion à l'halogénure d'argent à sensibilité spectrale différente constituant un assemblage de couches d'émulsion à l'halogénure d'argent,
   (2) le matériau de copie est soumis à une exposition polychrome à étape unique sous forme de multiples éléments d'image,
   (3) le matériau de copie exposé est soumis à un traitement chromogène, d'où résulte un modèle d'éléments d'image coloré différemment dans chacune des couches d'émulsion à l'halogénure d'argent,
   (4) le matériau de copie soumis au traitement chromogène est enduit du côté de l'assemblage de couches d'émulsion à l'halogénure d'argent d'une couche de résine organique, hydrophobe et imperméable à l'eau (16), et
   (5) la couche transparente à électrode (14) est déposée par enduction sous vide sur la couche de résine organique (16) servant de couche superficielle pour l'assemblage de couches d'émulsion à l'halogénure d'argent traité constituant le filtre polychrome (15).

2. Un procédé suivant la revendication 1, caractérisé en ce que la couche superficielle se compose d'un matériau de résine polymère à forte résistance spécifique d'au moins $10^{10}$ $\Omega$.cm.

3. Un procédé suivant la revendication 1 ou 2, caractérisé en ce que la couche superficielle présente une épaisseur comprise entre 1 et 10 $\mu$m.

4. Un procédé suivant l'une quelconque des revendications 1 à 3, caractérisé en ce que la couche superficielle se compose d'un polymère hydrophobe, réticulable, ou d'un composé hydrophobe, réticulable de prépolymères et de monomères qui peut être durci sous l'action de la lumière ultraviolette et qui a été réticulé par une polymérisation par voie radicalaire à l'aide d'une substance qui produit des radicaux libres lors d'une exposition au rayonnement UV.

5. Un procédé suivant la revendication 4, caractérisé en ce que les monomères générateurs d'une réaction de réticulation sont l'acrylate d'hexanediol, le diacrylate de silicone, le triacrylate de triméthylolpropane, les acrylates aliphatiques et aromatiques d'uréthane, l'acrylate de glycidyle, ou des mélanges de ces monomères, ou les solvants des monomères pour les prépolymères utilisés.

6. Un procédé suivant la revendication 4 ou 5, caractérisé en ce que les prépolymères sont les acrylates de polyester. les acrylates des résines époxydes, les composés à l'acrylate d'uréthane ou les composés au diacrylate d'uréthane.

7. Un procédé suivant l'une quelconque des revendications 1 à 3, caractérisé en ce que la couche superficielle se compose d'un polymère hydrophobe, réticulable, qui peut être durci sous l'action de la chaleur.

8. Un procédé suivant la revendication 7, caractérisé en ce que le polymère apte au durcissement à chaud est une résine époxyde qui peut être durcie aux amines et/ou aux anhydrides.

9. Un procéde suivant l'une quelconque des revendications précédentes, caractérisé en ce que le support de verre a été présubstraté aux composés au silicium.

10. Un procéde suivant l'une quelconque des revendications précédentes, caractérisé en ce que le matériau photographique de copie, avant d'être exposé, comporte un support de verre transparent revêtu de trois couches d'émulsion à l'halogénure d'argent de sensibilité spectrale différente. dont l'une de ces couches présente une sensibilité spectrale dans le spectre visible constituée essentiellement par une sensibilité à la lumière bleue et contient un copulant chromogène pour la formation d'un colorant jaune lors du développement chromogène, et dont les deux autres couches d'émulsion à l'halogénure d'argent sont sensibles resp. à la lumière verte et rouge, tout en étant essentiellement insensibles à la lumière bleue et contiennent un copulant chromogène pour la formation resp. d'un colorant magenta et d'un colorant bleu-vert lors du développement chromogène.

11. Un procédé suivant l'une quelconque des revendications 1 à 9, caractérisé en ce le matériau photographique de copie, avant d'être exposé, comporte un support de verre transparent revêtu de trois couches d'émulsion à l'halogénure d'argent de sensibilité spectrale différente, dont l'une de ces couches présente une sensibilité spectrale dans le spectre visible constituée essentiellement par une sensibilité à la lumière bleue et contient un colorant jaune pouvant être détruit suivant les principes d'un procédé de blanchiment de colorant à l'aide d'argent développé, et dont les deux autres couches d'émulsion à l'halogénure d'argent sont sensibles resp. à la lumière verte et rouge, tout en étant essentiellement insensibles à la lumière bleue et contiennent resp. un colorant magenta et un colorant bleu-vert pouvant être détruits suivant les principes d'un procédé de blanchiment de colorant à l'aide d'argent développé.

12. Un procédé suivant l'une quelconque des revendications 1 à 9, caractérisé en ce que le matériau photographique de copie, avant d'être exposé, contient une couche d'émulsion à l'halogénure d'argent extérieure présentant dans le spectre visible une sensibilité spectrale qui est essentiellement constituée par une sensibilité au bleu, et qui est séparée de deux autres couches d'émulsion à l'halogénure d'argent qui sont resp. sensibles au vert et au rouge par une couche absorbant la lumière bleue (à savoir une couche filtrante jaune).

13. Un procéde suivant l'une quelconque des revendications précédentes, caractérisé en ce que l'exposition à étape unique du matériau de copie multicouches s'effectue à travers une image maîtresse polychrome qui a été produite lors des étapes suivantes (I) à (VI):

(I) on procure un matériau photographique à émulsion à l'halogénure d'argent comportant (13) une couche unique d'émulsion à l'halogénure d'argent sur un support de verre transparent,

(II) la couche d'émulsion à l'halogénure d'argent est exposée. afin de générer une première image latente d'halogénure d'argent exposé, construite élément d'image par élément d'image,

(III) la couche exposée d'émulsion à l'halogénure d'argent est traitée avec une solution aqueuse contenant au moins un ingrédient apte à la formation d'une image de colorant par l'intermédiaire d'halogénure d'argent photo-exposé,

(IV) l'étape (II) est répétée, mais le matériau à couche d'émulsion à l'halogénure d'argent est exposé dans des zones qui diffèrent des zones exposées lors de l'étape (II),

(V) l'étape (III) est répété mais avec un (des) ingrédient(s) qui diffère(nt) de celui (ceux) utilisé(s) lors de l'étape (III), afin de former un autre colorant à absorption spectrale différente, le cas échéant, les étapes (IV) et (V) sont répétées, afin de générer chaque fois un modèle coloré différent dans d'autres zones non-exposées auparavant, et

(VI) l'argent produit est blanchi et presque tout l'argent est éliminé du matériau photographique par fixage et rinçage.

**14.** Un procédé suivant la revendication 13, caractérisé en ce que la formation du dernier modèle de colorant lors de la confection de l'image maîtresse polychrome s'effectue par l'exposition intégrale du matériau photographique ne comportant qu'une seule et unique couche photographique d'émulsion à l'halogénure d'argent, afin de voiler l'halogénure d'argent résiduel toujours sensible à la lumière, ou s'effectue par le voilage chimique de cet halogénure d'argent avant le développement chromogène.

**15.** Un procédé suivant la revendication 13 ou 14, caractérisé en ce que l'étape (III) consiste à traiter la couche exposée d'émulsion à l'halogénure d'argent avec une solution aqueuse contenant (1) un développateur chromogène pour l'halogénure d'argent exposé et (2) un copulant formant un colorant avec le développateur oxidé.

**16.** Un procédé suivant l'une quelconque des revendications 13 à 15, caractérisé en ce que pour la confection d'une image maîtresse polychrome contenant des zones jaunes, magenta et bleu-vert séparées, une seule et unique couche d'émulsion à l'halogénure d'argent d'un matériau photographique à support transparent est soumise aux étapes suivantes :

(i) elle est d'abord exposée à un modèle de lumière correspondant à l'une des couleurs primaires bleu, vert ou rouge;

(ii) le matériau photographique exposé est ensuite développé dans un révélateur chromogène comportant un développateur chromogène et un premier copulant formant avec le développateur oxidé un colorant jaune, magenta ou bleu-vert, ce qui occasionne la formation simultanée d'une image noire de métal argentique, laissant de l'halogénure d'argent toujours photosensible dans la zone non-exposée du matériau photographique,

(iii) une fois le premier développement terminé, le matériau photographique est lavé, afin d'éliminer le révélateur,

(iv) les phases précitées d'exposition, de développement et de lavage sont répétées deux fois, où chaque fois d'autres zones contenant toujours de l'halogénure d'argent photosensible sont développées, afin d'obtenir finalement un élément filtrant à dessin polychrome comportant des zones jaunes, magenta et bleu-vert séparées dans une couche unique, et

(v) après que le matériau photographique a été lavé après la dernière phase de développement chromogène, tout l'argent est blanchi et éliminé par fixage et lavage.

**17.** Un procédé suivant la revendication 15 ou 16, caractérisé en ce que chaque développement chromogène du matériau photographique comportant cette couche unique d'émulsion à l'halogénure d'argent est suivi d'une phase de blanchiment d'argent transformant l'argent métallique de l'image ainsi que l'argent éventuellement restant de l'image latente en halogénure d'argent, ou est suivi d'un développement extrême en noir (développement approfondi), afin d'éviter que de l'halogénure d'argent exposé et développable ne reste disponible dans une zone qui vient d'être soumise à l'un des développements chromogènes.

**18.** Un procédé suivant l'une quelconque des revendications 13 à 17, caractérisé en ce qu'un seul et même masque à ouvertures carrées est utilisé lors de toutes les expositions du matériau photographique ne comportant qu'une seule et unique couche d'émulsion à l'halogénure d'argent, mais qu'après chaque développement chromogène et avant l'exposition suivante, ce masque est déplacé conforme à une distance correspondant à la longueur du côté de l'ouverture carrée plus la largeur éventuelle d'un espacement, de façon que des zones carrées avoisinantes colorées différemment se forment lors des développements chromogènes successifs.

**19.** Un procédé suivant l'une quelconque des revendications 13 à 18, caractérisé en ce qu'un masque différent est utilisé lors de chaque exposition du matériau photographique comportant cette couche unique d'émulsion à l'halogénure d'argent et que les diverses expositions s'effectuent en repérage par rapport au matériau photographique, afin d'obtenir lors des diverses expositions un modèle escompté de zones colorées différemment qui soit s'avoisinent directement, soit sont séparées par un filet de contour.

**20.** Un procédé suivant l'une quelconque des revendications 13 à 19. caractérisé en ce que la granularité moyenne de l'halogénure d'argent contenu dans la couche d'émulsion à l'halogénure d'argent du matériau photographique ne comportant qu'une seule et unique couche d'émulsion à l'halogénure d'argent. n'est pas supérieure à 0,1 $\mu$m.

**21.** Un procédé suivant l'une quelconque des revendications 13 à 20. caractérisé en ce que de l'halogénure d'argent dans le matériau de copie multicouches à émulsion à l'halogénure d'argent exposé est développé

en argent à l'aide d'un développateur copulant en état oxidé avec un ou plusieurs copulants chromogènes.

**22.** Un procédé suivant l'une quelconque des revendications 13 à 21, caractérisé en ce que le matériau de copie multicouches exposé est soumis à un traitement chromogène par destruction de colorant à l'aide de l'argent obtenu lors d'un développement en noir lors d'un procédé de blanchiment de colorant se déroulant avec le matériau de copie multicouches à émulsion à l'halogénure d'argent renfermant déjà des colorants azoïques jaunes, magenta et bleu-vert dans une couche d'émulsion à l'halogénure d'argent à effet négatif sensible resp. au bleu, au vert et au rouge.

**23.** Un procédé suivant l'une quelconque des revendications 13 à 21, caractérisé en ce que l'élément filtrant polychrome se constitue dans le matériau de copie multicouches à émulsion à l'halogénure d'argent exposé suite à la destruction de colorant à l'aide de l'argent obtenu lors d'un développement en noir lors d'un procédé de blanchiment de colorant se déroulant avec un matériau photographique multicouches à émulsion à l'halogénure d'argent renfermant déjà des colorants azoïques jaunes, magenta et bleu-vert dans une couche d'émulsion à l'halogénure d'argent du type autopositif sensible resp. au bleu, au vert et au rouge, à savoir où du métal argentique est obtenu dans les zones non-exposées lors du développement et point de métal argentique n'est obtenu dans les zones exposées.

**24.** Un procédé suivant l'une quelconque des revendications 1 à 12, caractérisé en ce que l'assemblage de couches d'émulsion à l'halogénure d'argent est rendu moins perméable à l'eau par un durcissement de son liant hydrophile colloïdal, avant que l'étape (4) ne soit parcourue.

**25.** Un procédé suivant la revendication 24, caractérisé en ce que le liant hydrophile colloïdal est de la gélatine qui est durcie à l'aide d'un durcissant contenant une multiplicité de groupements époxy.

**26.** Un dispositif d'affichage polychrome à cristaux liquides comportant entre une paire d'électrodes (11, 14) une couche à cristaux liquides (12) se constituant essentiellement de cristaux nématiques dans une configuration tordue ou surtordue ou de cristaux liquides ferroélectriques smectiques C (smectiques à chiralité), où les molécules des cristaux liquides sont tellement alignées, que cette couche présente une rotation réglable par voie électrique du plan de polarisation de la lumière transmise par elle, quand le champ électrique sur la couche à cristaux liquides (12) est modifié élément d'image par élément d'image, et les électrodes (11, 14) sont liées à un élément polariseur de lumière (15) resp. avant et arrière qui se compose d'un matériau à couche d'émulsion à l'halogénure d'argent, soumis à un traitement chromogène, présentant un assemblage d'une multiplicité de diverses couches d'émulsion à l'halogénure d'argent spectralement sensibles. appliquées sur un support de verre (13), et l'élément filtrant polychrome du côté de son assemblage de couches d'émulsion à l'halogénure d'argent est enduit d'une couche de résine organique, hydrophobe et imperméable à l'eau (16), sur laquelle se trouve une des électrodes (14) établissant un contact direct avec la couche à cristaux liquides.

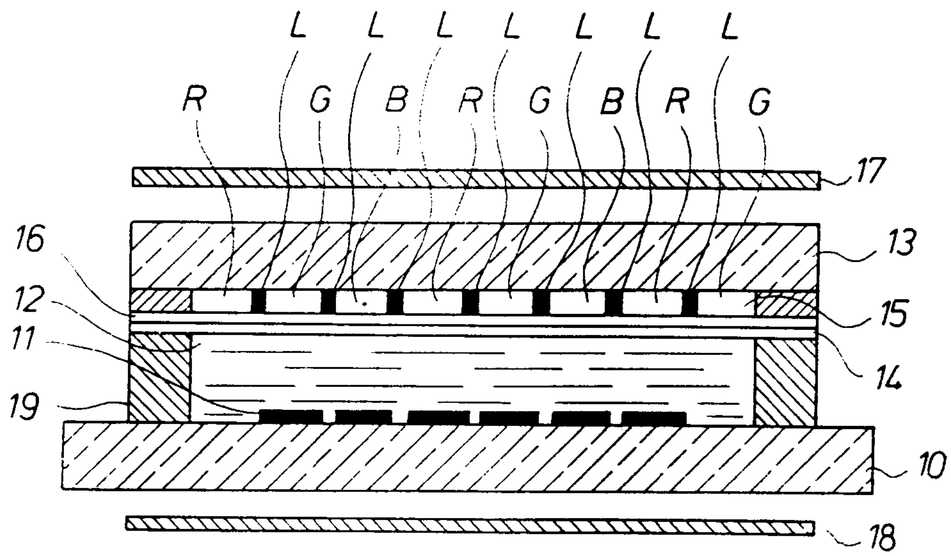
L
L
L
L
L
L
L
R
G
B
R
G
B
R
G
17
16
13
12
15
11
14
19
10
18